# EUROPÄISCHE PATENTSCHRIFT

(11) **EP 2 683 495 B1**
(45) Veröffentlichungstag und Bekanntmachung des Hinweises auf die Patenterteilung: **05.05.2021**
(21) Anmeldenummer: 11709067.0
(22) Anmeldetag: 07.03.2011
(51) Int. Cl.: B08B 3/02

(54) **BEHEIZBARES HOCHDRUCKREINIGUNGSGERÄT**
HEATABLE HIGH-PRESSURE CLEANING DEVICE
NETTOYEUR HAUTE PRESSION POUVANT ÊTRE CHAUFFÉ

(43) Veröffentlichungstag der Anmeldung: 15.01.2014
(73) Patentinhaber: Alfred Kärcher SE & Co. KG, 71364 Winnenden (DE)
(72) Erfinder: KELLE, Stefan, 69118 Heidelberg (DE); SEITTER, Ralph, 71522 Backnang (DE)
(74) Vertreter: Hoeger, Stellrecht & Partner Patentanwälte mbB
(86) Internationale Anmeldenummer: PCT/EP2011/053402
(87) Internationale Veröffentlichungsnummer: WO 2012/119641

(56) Entgegenhaltungen:
- EP-A1- 2 145 699
- EP-A2- 1 393 824
- WO-A1-02/20295
- DE-A1-102007 018 250
- US-A- 2 561 580
- US-A- 4 986 436
- US-A1- 2005 115 621
- US-B1- 6 455 017

## Beschreibung

Die Erfindung betrifft ein beheizbares Hochdruckreinigungsgerät mit einem brennstoffbetriebenen Wärmetauscher und einem Brennstofftank, der ein Tankoberteil mit einer verschließbaren Einfüllöffnung und ein den Boden des Brennstofftanks ausbildendes Tankunterteil aufweist.

Mit Hilfe beheizbarer Hochdruckreinigungsgeräte kann eine Reinigungsflüssigkeit, vorzugsweise Wasser, mittels einer Hochdruckpumpe unter Druck gesetzt und anschließend mittels eines Wärmetauschers erhitzt werden. Die erhitzte Reinigungsflüssigkeit kann anschließend auf ein zu reinigendes Objekt gerichtet werden. Der Wärmetauscher wird üblicherweise mit Hilfe eines flüssigen Brennstoffes, beispielsweise Heizöl oder Diesel, betrieben und kann hierzu eine Rohrwendel aufweisen, die von einem Brenner beheizt wird und durch die die Reinigungsflüssigkeit geleitet wird. Derartige beheizbare Hochdruckreinigungsgeräte sind beispielsweise aus der DE 10 2008 009 221 A1 bekannt.

Der flüssige Brennstoff zum Betreiben des Wärmetauschers wird in einem Brennstofftank des Hochdruckreinigungsgerätes bevorratet. In vielen Fällen ist der Brennstofftank zweiteilig ausgestaltet und umfasst ein Tankunterteil und ein Tankoberteil, die flüssigkeitsdicht miteinander verbunden sind. Es kann beispielsweise vorgesehen sein, dass das Tankunterteil mit dem Tankoberteil verschraubt werden kann unter Zwischenlage eines Dichtungselementes, insbesondere eines Dichtringes.

Ein beheizbares Hochdruckreinigungsgerät mit einem brennstoffbetriebenen Wärmetauscher und mit einem Brennstofftank ist aus der Veröffentlichung DE 10 2007 018 250 A1 bekannt.

Ein mobiler Hochdruckreiniger wird in der Veröffentlichung EP 1 393 824 A2 beschrieben.

Aus der Veröffentlichung US 2005/0115621 A1 ist ein mobiler Tankaufbau bekannt, insbesondere ein Sattelauflieger mit Tankaufbau. Der Tankaufbau ist doppelwandig ausgestaltet und kann auf seiner Oberseite befüllt werden. Das Tankvolumen kann durch Zwischenwände in mehrere Bereiche unterteilt sein. Aus der Veröffentlichung US 4,986,436 A ist ein ortsfester Brennstofftank bekannt mit einem Stahlbehälter, der von einer massiven Betonwand umgeben ist und einen Überfüllschutz aufweist mit einer Aufnahmewanne, die beim Überfüllen des Brennstofftanks überschüssigen Brennstoff aufnimmt. Die Aufnahmewanne ist innerhalb des Tanks unterhalb von dessen Einfüllöffnung angeordnet.

Aus der Veröffentlichung US 2,561,580 A ist ein Brennstofftank bekannt, der nur bis unterhalb des Fügebereichs zwischen einem Oberteil und einem Unterteil mit flüssigem Brennstoff befüllbar ist. Der Brennstofftank weist eine Füllstandbegrenzungseinrichtung auf zur Begrenzung des maximalen Füllstands des Brennstofftanks auf eine Füllstandshöhe, die kleiner ist als der Abstand zwischen dem Fügebereich und dem Boden des Brennstofftanks.

Aus der Veröffentlichung EP 2 145 699 A1 ist ein beheizbares Hochdruckreinigungsgerät gemäß dem Oberbegriff des Patentanspruchs 1 bekannt, das einen brennstoffbetriebenen Wärmetauscher und einen Brennstfftank umfasst. Der Brennstofftank weist ein Tankoberteil mit einer verschließbaren Einfüllöffnung und ein Tankunterteil auf, das den Boden des Brennstofftanks ausbildet. Das Tankoberteil ist über einen Fügebereich stoffschlüssig mit dem Tankunterteil verbunden, wobei sich der Fügebereich in einer horizontalen Gebrauchslage des Hochdruckreinigungsgeräts in einer horizontalen Ebene erstreckt. Der Brennstofftank umfasst eine Füllstandbegrenzungseinrichtung zur Begrenzung des maximalen Füllstands des Brennstofftanks in der horizontalen Gebrauchslage des Hochdruckreinigungsgeräts. Aufgabe der vorliegenden Erfindung ist es, ein beheizbares Hochdruckreinigungsgerät der gattungsgemäßen Art derart weiterzubilden, dass es kostengünstiger herstellbar ist und eine längere Lebensdauer aufweist.

Diese Aufgabe wird durch ein beheizbares Hochdruckreinigungsgerät mit den Merkmalen von Patentanspruch 1 gelöst.

In die Erfindung fließt der Gedanke mit ein, dass die Herstellungskosten des Hochdruckreinigungsgerätes reduziert werden können, indem das Tankoberteil des Brennstofftankes mit dem Tankunterteil stoffschlüssig verbunden wird. Dies ermöglicht eine flüssigkeitsdichte Verbindung der beiden Tankteile. Die stoffschlüssige Verbindung kann beispielsweise durch Löten, Kleben oder Schweißen erzielt werden. Bei einer derartigen stoffschlüssigen Verbindung besteht allerdings die Gefahr, dass sie durch den flüssigen Brennstoff, der im Brennstofftank bevorratet wird, beeinträchtigt wird. In vielen Fällen weist der Brennstoff nämlich Bestandteile auf, die die stoffschlüssige Verbindung der beiden Tankteile des Brennstofftankes beeinträchtigen und dazu führen können, dass der Fügebereich versprödet und der Brennstofftank im Fügebereich undicht wird. Um dieser Gefahr entgegenzuwirken ist der Brennstofftank beim erfindungsgemäßen Hochdruckreinigungsgerät nur bis unterhalb des Fügebereiches mit flüssigem Brennstoff befüllbar. In der horizontalen Gebrauchslage des Hochdruckreinigungsgerätes erreicht somit der in den Brennstofftank eingefüllte Brennstoff nicht den Fügebereich und kann diesen daher auch nicht dauerhaft beeinträchtigen. Allenfalls in einer Schräglage oder beim Transportieren des Hochdruckreinigungsgerätes kann der im Brennstofftank befindliche Brennstoff den Fügebereich kontaktieren. Hierbei handelt es sich allerdings nur um eine kurze Kontaktierung, die den Fügebereich nicht merklich beeinträchtigt. Eine lange Kontaktierung, wie sie bei einem dauerhaften Füllstand des Brennstofftankes bis in eine Höhe oberhalb des Fügebereiches vorliegen würde, wird durch das erfindungsgemäße Hochdruckreinigungsgerät vermieden. Das Hochdruckreinigungsgerät gemäß der Erfindung kann somit kostengünstig hergestellt werden und weist dennoch eine hohe Lebensdauer auf.

Der Fügebereich erstreckt sich in der horizontalen Gebrauchslage des Hochdruckreinigungsgerätes in einer horizontal ausgerichteten Ebene. Die horizontale Ausrichtung des Fügebereiches in der horizontalen Gebrauchslage des Hochdruckreinigungsgerätes stellt auf konstruktiv einfache Weise sicher, dass der flüssige Brennstoff, der in den Brennstofftank gefüllt wird, den Fügebereich an keiner Stelle erreichen und beeinträchtigen kann.

Um sicherzustellen, dass der Brennstofftank in der horizontalen Gebrauchslage des Hochdruckreinigungsgerätes nur bis unterhalb des Fügebereiches befüllbar ist, weist er eine Füllstandbegrenzungseinrichtung auf. Mittels der Füllstandbegrenzungseinrichtung ist der maximale Füllstand des Brennstofftanks in der horizontalen Gebrauchslage des Hochdruckreinigungsgerätes auf eine Füllstandshöhe begrenzbar, die kleiner ist als der Abstand zwischen dem Fügebereich und dem Boden des Brennstofftanks. Die maximale Füllstandshöhe ist somit geringer als die Höhe des Fügebereiches relativ zum Boden des Brennstofftankes. Die Füllstandbegrenzungseinrichtung stellt sicher, dass der Brennstofftank überläuft, sofern der Benutzer nach Erreichen der maximalen Füllstandshöhe weiter flüssigen Brennstoff in den Brennstofftank einfüllt.

Das Hochdruckreinigungsgerät weist ein Fahrgestell auf und der Brennstofftank ist in das Fahrgestell integriert. Zusätzlich zu seiner Funktion, dem fahrbaren Hochdruckreinigungsgerät die erforderliche mechanische Stabilität zu verleihen weist das Fahrgestell bei einer derartigen Ausgestaltung die weitere Funktion auf, den Brennstofftank auszubilden. Das Fahrgestell definiert zu diesem Zweck einen Hohlraum, der den Brennstofftank bildet und mit flüssigem Brennstoff befüllt werden kann.

Das Fahrgestell weist ein aus Kunststoff gefertigtes Gestellunterteil und ein aus Kunststoff gefertigtes Gestelloberteil auf, wobei das Gestellunterteil mit dem Gestelloberteil verschweißt ist und wobei das Gestellunterteil das Tankunterteil des Brennstofftanks und das Gestelloberteil das Tankoberteil des Brennstofftanks ausbildet.

Gemäß der Erfindung ist das Tankoberteil über eine Schweißnaht mit dem Tankunterteil verbunden und der Brennstofftank ist in der horizontalen Gebrauchslage des Hochdruckreinigungsgerätes nur bis unterhalb der Schweißnaht mit flüssigem Brennstoff befüllbar. Wird das Hochdruckreinigungsgerät in einer horizontalen Gebrauchslage in Betrieb gesetzt, so kann der flüssige Brennstoff auch bei vollständig befülltem Brennstofftank die Schweißnaht zwischen dem Tankoberteil und dem Tankunterteil nicht erreichen, so dass diese durch den flüssigen Brennstoff nicht beeinträchtigt werden kann.

Die Füllstandbegrenzungseinrichtung ist bei einer vorteilhaften Ausführungsform der Erfindung an der dem Boden des Brennstofftanks zugewandten Unterseite des Tankoberteils angeordnet. Bei der Montage des Brennstofftankes kann das Tankoberteil auf das Tankunterteil aufgesetzt werden. Die Füllstandbegrenzungseinrichtung nimmt hierbei eine Lage zwischen den beiden Tankteilen ein, wobei sie günstigerweise an der Unterseite des Tankoberteils angeordnet ist.

Eine besonders einfache Montage des Hochdruckreinigungsgerätes wird bei einer vorteilhaften Ausführungsform der Erfindung dadurch erzielt, dass die Füllstandbegrenzungseinrichtung mit dem Tankoberteil einteilig verbunden ist. So kann beispielsweise vorgesehen sein, dass die Füllstandbegrenzungseinrichtung zusammen mit dem Tankoberteil ein einteiliges Kunststoffformteil ausbilden.

Bei einer konstruktiv besonders einfachen Ausgestaltung des erfindungsgemäßen Hochdruckreinigungsgerätes umfasst die Füllstandbegrenzungseinrichtung ein Tauchrohr, wobei die Einfüllöffnung in das Tauchrohr mündet und das Tauchrohr sich in der horizontalen Gebrauchslage des Hochdruckreinigungsgerätes innerhalb des Brennstofftanks bis unterhalb des Fügebereiches erstreckt. Die dem Boden des Brennstofftanks zugewandte Unterkante des Tauchrohres nimmt somit eine Lage unterhalb des Fügebereichs ein. Der Brennstofftank kann über die Einfüllöffnung und das sich im Innenraum des Brennstofftanks an die Einfüllöffnung anschließende Tauchrohr befüllt werden. Erreicht der Flüssigkeitsspiegel des eingefüllten Brennstoffes die Unterkante des Tauchrohres, so kann beim weiteren Befüllen des Brennstofftankes die außerhalb des Tauchrohrs oberhalb der Unterkante des Tauchrohres befindliche Luft nicht aus dem Brennstofftank entweichen, da der Brennstofftank mit Ausnahme der Einfüllöffnung keine weitere Luftauslassöffnung aufweist, über die im Brennstofftank befindliche Luft ausströmen könnte. Die im Brennstofftank oberhalb der Unterkante des Tauchrohres befindliche Luft verhindert ein weiteres Ansteigen des Füllstandes innerhalb des Brennstofftanks. Beim weiteren Befüllen kann lediglich noch das sich an die Einfüllöffnung anschließende Tauchrohr befüllt werden, anschließend läuft der Brennstofftank über. Das Tauchrohr verhindert jedoch zuverlässig, dass der im Brennstofftank befindliche Brennstoff den Fügebereich zwischen dem Tankoberteil und dem Tankunterteil erreichen kann.

Günstigerweise ist das Tauchrohr an das Tankoberteil angeformt. Dies erleichtert sowohl die Herstellung als auch die Montage des Brennstofftankes.

Um das Einfüllen von Brennstoff in den Brennstofftank zu erleichtern, ist es von Vorteil, wenn die Einfüllöffnung außerhalb des Brennstofftanks von einem Einfüllstutzen umgeben ist. Dieser ist bei einer vorteilhaften Ausführungsform der Erfindung koaxial zum Tauchrohr ausgerichtet. Insbesondere kann vorgesehen sein, dass die Mantelflächen des Einfüllstutzens und des Tauchrohrs fluchtend zueinander ausgerichtet sind, so dass sich in Einfüllrichtung an den Einfüllstutzen nahtlos das Tauchrohr anschließt.

Besonders kostengünstig und montagefreundlich kann der Brennstofftank ausgestaltet werden, indem das Tankoberteil, der Einfüllstutzen und das Tauchrohr ein einteiliges Kunststoffformteil ausbilden.

Wie bereits erwähnt, erfolgt die stoffschlüssige Verbindung zwischen dem Tankunterteil und dem Tankoberteil über einen Fügebereich. Im Falle einer Schweißverbindung wird der Fügebereich von der Schweißnaht zwischen dem Tankoberteil und dem Tankunterteil ausgebildet. Im Falle einer nicht erfindungsgemäßen Klebeverbindung wird der Fügebereich durch die Klebstoffschicht zwischen dem Tankunterteil und dem Tankoberteil definiert.

Es ist vorgesehen, dass sich der Fügebereich zwischen einer Unterkante des Tankoberteils und einer Oberkante des Tankunterteils erstreckt. Das Tankoberteil kann bei einer derartigen Ausgestaltung mit seiner Unterkante auf die Oberkante des Tankunterteils aufgesetzt werden.

Bei einer vorteilhaften Ausführungsform bildet der Brennstofftank zumindest einen Teil der Außenkontur des Hochdruckreinigungsgerätes. Um eine Beschädigung des Fügebereichs bei unbeabsichtigtem Aufprall des Hochdruckreinigungsgerätes auf einem Hindernis zu vermeiden, ist es von Vorteil, wenn der Brennstofftank in seinem zumindest einen Teil der Außenkontur des Hochdruckreinigungsgerätes bildenden Außenbereich einen elastisch verformbaren Stoßschutz trägt, der sich auf der Außenseite des Brennstofftanks entlang des Fügebereichs erstreckt. Durch den außenseitig angeordneten Stoßschutz wird der Fügebereich vor mechanischen Beeinträchtigungen geschützt. Dies hat eine weitere Verlängerung der Lebensdauer des Hochdruckreinigungsgerätes zur Folge.

Der Stoßschutz umfasst bevorzugt mindestens eine elastisch verformbare Stoßlippe, die an das Tankoberteil oder das Tankunterteil angeformt ist.

Besonders günstig ist es, wenn der Stoßschutz zwei elastisch verformbare Stoßlippen aufweist, die einander zugewandt sind und in Höhe des Fügebereichs zwischen sich einen Spalt ausbilden. Eine obere Stoßlippe kann hierbei an das Tankoberteil angeformt sein und eine untere Stoßlippe kann an das Tankunterteil angeformt sein. Trifft das Hochdruckreinigungsgerät in dem Bereich seiner Außenkontur, der vom Brennstofftank gebildet ist, auf ein Hindernis, so können die beiden elastisch verformbaren Stoßlippen die mit dem Auftreffen des Hochdruckreinigungsgerätes auf das Hindernis verbundene Stoßenergie absorbieren. Die Gefahr, dass bei einem derartigen Stoß der Fügebereich beschädigt wird, wird somit gering gehalten.

Die nachfolgende Beschreibung einer bevorzugten Ausführungsform der Erfindung dient im Zusammenhang mit der Zeichnung der näheren Erläuterung. Es zeigen:
- Figur 1:: eine perspektivische Darstellung eines erfindungsgemäßen beheizbaren Hochdruckreinigungsgerätes, wobei eine Einfüllöffnung eines Brennstofftanks von einem Deckel verschlossen ist;
- Figur 2:: eine perspektivische Darstellung des in Figur 1 dargestellten beheizbaren Hochdruckreinigungsgerätes, wobei der Deckel von der Einfüllöffnung des Brennstofftanks entfernt wurde, und
- Figur 3.: eine Schnittansicht des Brennstofftanks längs der Linie 3-3 in Figur 1.

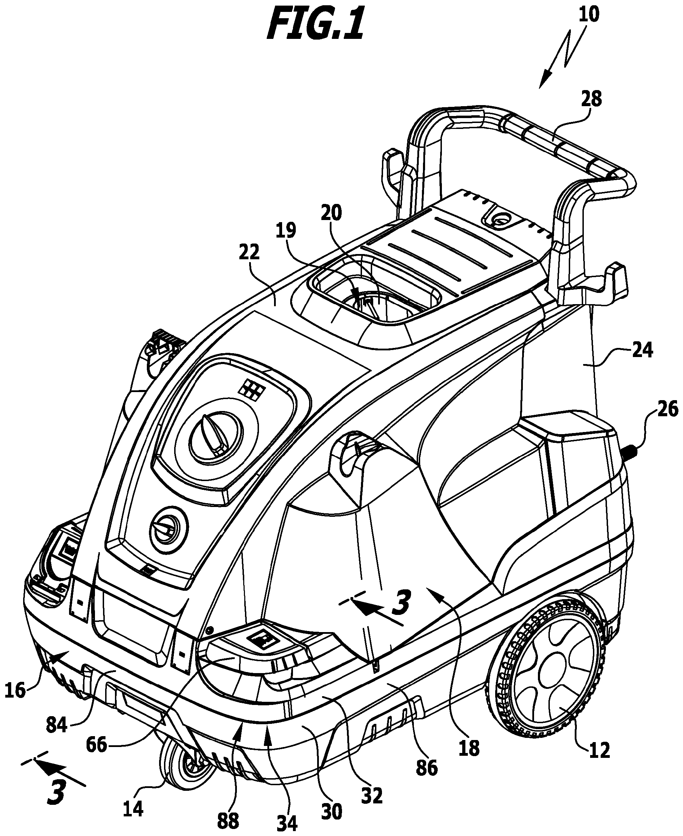

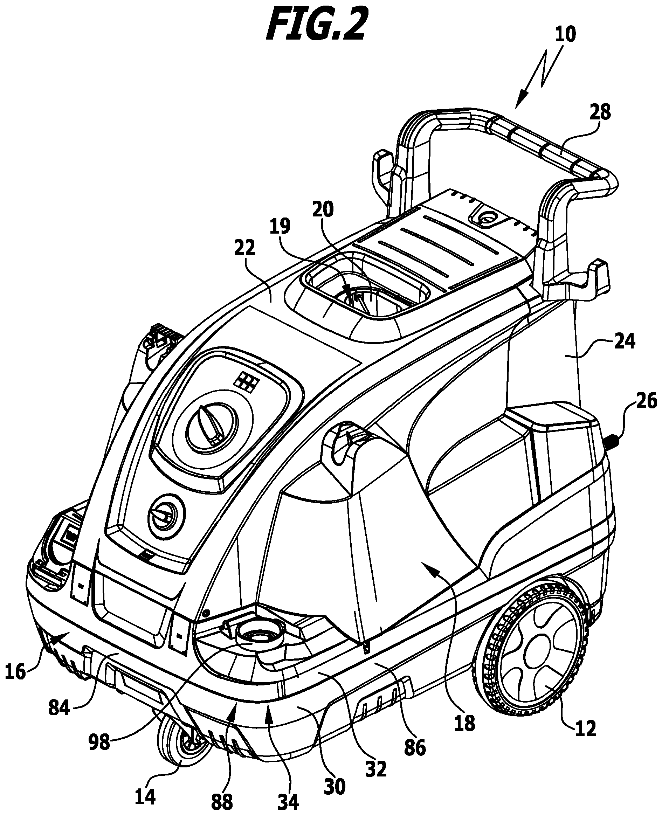

In den Figuren 1 und 2 ist schematisch ein erfindungsgemäßes beheizbares Hochdruckreinigungsgerät 10 dargestellt, das in der dargestellten Ausführungsform verfahrbar ist und hierzu Laufräder aufweist, wobei in der Zeichnung ein hinteres Laufrad 12 sowie eine Lenkrolle 14 erkennbar sind, die an der Unterseite eines Fahrgestells 16 drehbar gelagert sind. Innerhalb eines Gehäuses 18 sind in an sich bekannter und aus der Zeichnung nicht erkennbarer Weise eine Hochdruckpumpe und ein die Hochdruckpumpe antreibender Elektromotor angeordnet sowie auch ein der Hochdruckpumpe nachgeschalteter brennstoffbetriebener Wärmetauscher 19, dessen Abgasrohr 20 in eine Haube 22 einmündet, die in Kombination mit einem Basisteil 24 das auf dem Fahrgestell 16 positionierte Gehäuse 18 ausbildet.

Über einen in der Zeichnung nicht dargestellten Niederdruckeinlass kann der im Gehäuse 18 angeordneten Hochdruckpumpe eine Reinigungsflüssigkeit, insbesondere Wasser, zugeführt werden, die von der Hochdruckpumpe unter Druck gesetzt und mit Hilfe des Wärmetauschers erhitzt und anschließend

über einen Hochdruckauslass 26 abgegeben wird. An den Hochdruckauslass 26 kann ein Hochdruckschlauch angeordnet werden, der an seinem freien Ende in an sich bekannter Weise eine Spritzpistole trägt, an die sich ein Strahlrohr anschließt. Auf diese Weise kann die unter Druck gesetzte und erhitzte Reinigungsflüssigkeit auf ein zu reinigendes Objekt gerichtet werden.

Zum Transport kann das beheizbare Hochdruckreinigungsgerät 10 von einer Bedienungsperson an einem Griffbügel 28 geführt werden.

Das Fahrgestell 16 trägt die Hochdruckpumpe sowie deren Antriebsmotor und auch den Wärmetauscher 19, die unterhalb der Haube 22 angeordnet sind. Die Haube 22 kann zwischen einer in den Figuren 1 und 2 dargestellten Schließstellung und einer in der Zeichnung nicht dargestellten Offenstellung hin und her verschwenkt werden. In der Offenstellung sind die Hochdruckpumpe, deren Antriebsmotor sowie der nachgeschaltete Wärmetauscher 19 dem Benutzer zugänglich.

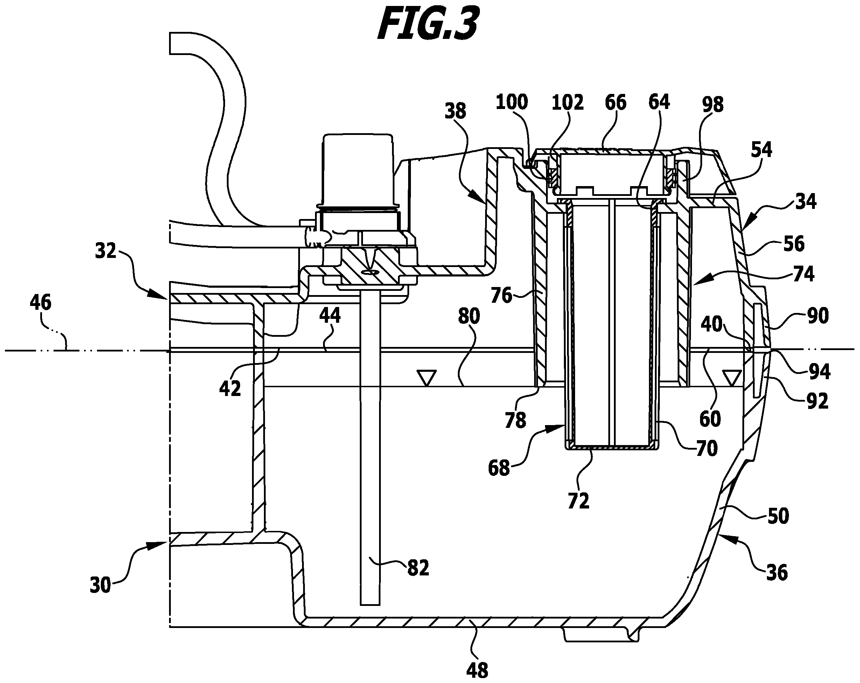

Das Fahrgestell 16 ist zweiteilig ausgebildet und umfasst ein aus Kunststoff gefertigtes Gestellunterteil 30 und ein ebenfalls aus Kunststoff gefertigtes Gestelloberteil 32. In das Fahrgestell 16 ist ein in Figur 3 schematisch dargestellter Brennstofftank 34 integriert, in dem der zum Betrieb des Wärmetauschers 19 erforderliche flüssige Brennstoff, beispielsweise Heizöl oder Diesel, bevorratet wird. Der Brennstofftank 34 umfasst ein vom Gestellunterteil 30 gebildetes Tankunterteil 36 und ein vom Gestelloberteil 32 gebildetes Tankoberteil 38, die stoffschlüssig und flüssigkeitsdicht miteinander verbunden sind. Das Tankunterteil 36 und das Tankoberteil 38 sind über eine Schweißnaht 40 miteinander verbunden. Die Schweißnaht 40 bildet einen Fügebereich 60, der sich zwischen einer Unterkante 42 des Tankoberteils 38 und einer Oberkante 44 des Tankunterteils 36 erstreckt. In der in den Figuren 1 und 2 dargestellten horizontalen Gebrauchslage des Hochdruckreinigungsgerätes 10, in welcher das Hochdruckreinigungsgerät 10 auf einer horizontalen Standfläche abgestellt ist, erstreckt sich die Schweißnaht 40 und damit auch der Fügebereich 60 in einer horizontal ausgerichteten Ebene 46.

Das Tankunterteil 36 des Brennstofftankes 34 ist wannenförmig ausgebildet und umfasst einen Boden 48 des Brennstofftankes 34 sowie eine umlaufende untere Seitenwand 50, die einstückig mit der Bodenwand 48 verbunden ist und sich bis zur Oberkante 44 des Tankunterteils 36 erstreckt. Das Tankoberteil 38 des Brennstofftanks 36 bildet eine Decke 54 des Brennstofftanks 34, an die sich in Richtung auf das Tankunterteil 34 einstückig eine umlaufende obere Seitenwand 56 anschließt. Die obere Seitenwand 56 erstreckt sich bis zur Unterkante 42 des Tankoberteils 38. Mit seiner Unterkante 42 ist das Tankoberteil 38 unter Zwischenlage des Fügebereiches 60 auf die Oberkante 44 des Tankunterteils 36 aufgesetzt. Der Fügebereich 60 wird von der umlaufenden Schweißnaht 40 gebildet. Über die Schweißnaht 40 ist das Tankunterteil 36 stoffschlüssig und flüssigkeitsdicht mit dem Tankoberteil 38 verbunden.

Im Bereich der Decke 54 weist das Tankoberteil 38 eine Einfüllöffnung 64 auf, die von einem in den Figuren 1 und 3 dargestellten Deckel 66 verschließbar ist. In die Einfüllöffnung 64 ist ein zylinderförmiges Siebteil 68 eingesetzt, dessen Mantelfläche von einem Sieb 70 und dessen Bodenfläche von einer Endscheibe 72 gebildet wird.

Über die Einfüllöffnung 64 und das Siebteil 68 kann der Brennstofftank 34 mit flüssigem Brennstoff befüllt werden. Um sicherzustellen, dass der eingefüllte Brennstoff in der horizontalen Gebrauchslage des Hochdruckreinigungsgerätes 10 den Fügebereich 60, das heißt die Schweißnaht 40 nicht erreichen kann, weist der Brennstofftank 34 eine Füllstandbegrenzungseinrichtung 74 auf, die im dargestellten Ausführungsbeispiel als Tauchrohr 76 ausgestaltet ist, das an die Decke 54 des Tankoberteils 38 angeformt ist und sich mit seiner Unterkante 78 bis in eine Höhe unterhalb des Fügebereichs 60 erstreckt. In das Tauchrohr 76 mündet die Einfüllöffnung 64 ein, so dass über die Einfüllöffnung 64 und das Tauchrohr 76 flüssiger Brennstoff in den Brennstofftank 34 eingefüllt werden kann. Erreicht der Flüssigkeitsspiegel 80 die Unterkante 78 des Tauchrohrs 76, so führt ein weiteres Einfüllen von Brennstoff lediglich dazu, dass das Tauchrohr 76 bis zur Einfüllöffnung 64 gefüllt wird, der eingefüllte Brennstoff kann aber den Fügebereich 60 und damit die Schweißnaht 62 nicht erreichen, da die innerhalb des Brennstofftanks 34 oberhalb der Unterkante 78 angeordnete Luft ein weiteres Ansteigen des Flüssigkeitsspiegels 80 verhindert. Die Luft oberhalb des Flüssigkeitsspiegels 80 kann nämlich lediglich über die Einfüllöffnung 64 entweichen. Der Brennstofftank 34 weist zwar in einem von der Haube 22 in deren Schließstellung abgedeckten Bereich eine Tanköffnung auf, die von einem in den Brennstofftank 34 eintauchenden Absaugrohr 82 durchgriffen wird, diese Tanköffnung ist jedoch flüssigkeitsdicht abgedichtet, so dass ein Luftaustritt vermieden wird. Die Füllstandsbegrenzungseinrichtung 74 in Form des an das Tankoberteil 38 angeformten Tauchrohrs 76 stellt somit sicher, dass der maximale Füllstand des Brennstofftanks 34 in der horizontalen Gebrauchslage des Hochdruckreinigungsgeräts 10 auf eine Höhe begrenzt ist, die kleiner ist als der Abstand, den der Fügebereich 60 zum Boden 48 des Brennstofftanks 34 einnimmt.

Das Tauchrohr 76 umgibt das Siebteil 68 in Umfangsrichtung, das in Richtung auf den Boden 48 über die Unterkante 78 des Tauchrohrs 76 herausragt.

Der Brennstofftank 34 ist im Bereich zwischen einer Stirnseite 84 und einer ersten Längsseite 86 des Fahrgestells 16 angeordnet und definiert im Bereich der Stirnseite 84 und der ersten Längsseite 86 die Außenkontur des Fahrgestells 16. In diesem Bereich trägt der Brennstofftank 34 außenseitig in Höhe des Fügebereichs 60 einen Stoßschutz 88, der von einer an das Tankoberteil 38 angeformten elastischen oberen Stoßlippe 90 und einer an das Tankunterteil 38 angeformten elastischen unteren Stoßlippe 92 gebildet wird. Die beiden Stoßlippen 90 und 92 sind einander zugewandt und definieren zwischen sich einen Spalt 94, der in Höhe des Fügebereiches 60 angeordnet ist. Trifft das fahrbare Hochdruckreinigungsgerät 10 im Übergangsbereich zwischen der Stirnseite 84 und der ersten Längsseite 86 des Fahrgestells 16 auf ein Hindernis, so wird mittels des Stoßschutzes 88 eine Beschädigung des Fügebereichs 60 und insbesondere das Auftreten einer Undichtigkeit im Bereich des Fügebereiches 60 verhindert.

Oberhalb der Einfüllöffnung 64 schließt sich auf der Außenseite der Decke 54 des Tankoberteils 38 ein Einfüllstützen 98 an, der koaxial und fluchtend zum Tauchrohr 76 ausgebildet ist und das Einfüllen von flüssigem Brennstoff in den Brennstofftank 34 erleichtert. Der Einfüllstutzen 98 bildet in Kombination mit dem Tauchrohr 76 und dem Tankoberteil 38 ein einstückiges Kunststoffformteil aus. Der Deckel 66 kann auf den Einfüllstutzen 98 aufgesetzt werden, wobei er mit einem elastisch verformbaren Innenkragen 100 in den Einfüllstutzen 98 eintaucht. Der Innenkragen 100 weist oberhalb des Einfüllstutzen 98 mehrere Belüftungsöffnungen 102 auf, über die beim Absaugen des Brennstofftanks 34 Luft aus der Umgebung des Hochdruckreinigungsgerätes 10 in den Brennstofftank 34 einströmen kann, um der Ausbildung eines Unterdrucks innerhalb des Brennstofftanks 34 entgegenzuwirken.

Der Brennstofftank 34 kann zusammen mit dem kompletten Fahrgestell 16 auf einfache Weise hergestellt und montiert werden. Sowohl das Gestelloberteil 32, das das Tankoberteil 38 ausbildet, als auch das Gestellunterteil 30, das das Tankunterteil 36 ausbildet, sind aus einem Kunststoffmaterial gefertigt. Bei der Montage des Fahrgestells 16 kann das Gestelloberteil 32 auf das Gestellunterteil 30 aufgesetzt und anschließend können die beiden Teile miteinander verschweißt werden. Nach erfolgter Verschweißung bildet das Tankunterteil 36 in Kombination mit dem Tankoberteil 38 den flüssigkeitsdichten Brennstofftank 34 aus. Eine Beeinträchtigung der Schweißnaht 40 durch einen dauerhaften Kontakt mit Brennstoff, der in den Brennstofftank 34 eingefüllt wird, wird mittels der Füllstandbegrenzungseinrichtung 74 verhindert, da diese sicherstellt, dass der maximale Füllstand des Brennstofftanks 34 lediglich eine Höhe unterhalb der Schweißnaht 40 erreicht. Sichergestellt wird dies dadurch, dass die Unterkante 78 des Tauchrohres 76 in der horizontalen Gebrauchslage des Hochdruckreinigungsgerätes unterhalb der Schweißnaht 40 angeordnet ist. Das erfindungsgemäße Hochdruckreinigungsgerät 10 ist somit kostengünstig herstellbar und weist eine verhältnismäßig lange Lebensdauer auf.

## Patentansprüche

1. Beheizbares Hochdruckreinigungsgerät (10) mit einem brennstoffbetriebenen Wärmetauscher (19) und einem Brennstofftank (34), der ein Tankoberteil (38) mit einer verschließbaren Einfüllöffnung (64) und ein den Boden (48) des Brennstofftanks (34) ausbildendes Tankunterteil (36) aufweist, wobei das Tankoberteil (38) über einen Fügebereich (60) stoffschlüssig mit dem Tankunterteil (36) verbunden ist, wobei sich der Fügebereich (60) in der horizontalen Gebrauchslage des Hochdruckreinigungsgerätes (10) in einer horizontalen Ebene (46) erstreckt, und wobei der Brennstofftank (34) eine Füllstandbegrenzungseinrichtung (74) umfasst zur Begrenzung des maximalen Füllstandes des Brennstofftanks (34) in der horizontalen Gebrauchslage des Hochdruckreinigungsgerätes (10), **dadurch gekennzeichnet, dass** der Brennstofftank (34) in einer horizontalen Gebrauchslage des Hochdruckreinigungsgerätes (10) nur bis unterhalb des Fügebereiches (60) mit flüssigem Brennstoff befüllbar ist, wobei der maximale Füllstand des Brennstofftanks (34) in der horizontalen Gebrauchslage des Hochdruckreinigungsgeräts (10) mittels der Füllstandbegrenzungseinrichtung (74) auf eine Füllstandshöhe begrenzbar ist, die kleiner ist als der Abstand zwischen dem Fügebereich (60) und dem Boden (48) des Brennstofftanks (34), und wobei das Hochdruckreinigungsgerät (10) ein Fahrgestell (16) aufweist und der Brennstofftank (34) in das Fahrgestell (16) integriert ist, wobei das Fahrgestell (16) ein aus Kunststoff gefertigtes Gestellunterteil (30) und ein aus Kunststoff gefertigtes Gestelloberteil (32) umfasst, wobei das Gestellunterteil (30) mit dem Gestelloberteil (32) verschweißt ist und wobei das Gestellunterteil (30) das Tankunterteil (36) und das Gestelloberteil (32) das Tankoberteil (38) des Brennstofftanks (34) ausbildet.

2. Beheizbares Hochdruckreinigungsgerät nach Anspruch 1, **dadurch gekennzeichnet, dass** die Füllstandbegrenzungseinrichtung (74) an der dem Boden (48) des Brennstofftanks (34) zugewandten Unterseite des Tankoberteils (38) angeordnet ist.

3. Beheizbares Hochdruckreinigungsgerät nach Anspruch 1 oder 2, **dadurch gekennzeichnet, dass** die Füllstandbegrenzungseinrichtung (74) mit dem Tankoberteil (38) einteilig verbunden ist.

4. Beheizbares Hochdruckreinigungsgerät nach einem der voranstehenden Ansprüche, **dadurch gekennzeichnet, dass** die Füllstandbegrenzungseinrichtung (74) ein Tauchrohr (76) umfasst, wobei die Einfüllöffnung (64) in das Tauchrohr (76) mündet und das Tauchrohr (76) sich in der horizontalen Gebrauchslage des Hochdruckreinigungsgerätes (10) innerhalb des Brennstofftanks (34) bis unterhalb des Fügebereichs (60) erstreckt.

5. Beheizbares Hochdruckreinigungsgerät nach Anspruch 4, **dadurch gekennzeichnet, dass** das Tauchrohr (76) an das Tankoberteil (38) angeformt ist.

6. Beheizbares Hochdruckreinigungsgerät nach Anspruch 4 oder 5, **dadurch gekennzeichnet, dass** die Einfüllöffnung (64) außerhalb des Brennstofftanks (34) von einem Einfüllstutzen (98) umgeben ist, der koaxial zum Tauchrohr (76) ausgerichtet ist.

7. Beheizbares Hochdruckreinigungsgerät nach Anspruch 6, **dadurch gekennzeichnet, dass** das Tankoberteil (38), der Einfüllstutzen (98) und das Tauchrohr (76) ein einteiliges Kunststoffformteil ausbilden.

8. Beheizbares Hochdruckreinigungsgerät nach einem der voranstehenden Ansprüche, **dadurch gekennzeichnet, dass** der Brennstofftank (34) in einem Außenbereich, der zumindest einen Teil der Außenkontur des Hochdruckreinigungsgerätes (10) bildet, einen elastisch verformbaren Stoßschutz (88) trägt, der sich entlang des Fügebereiches (60) erstreckt.

9. Beheizbares Hochdruckreinigungsgerät nach Anspruch 8, **dadurch gekennzeichnet, dass** der Stoßschutz (88) zumindest eine elastisch verformbare Stoßlippe (90, 92) umfasst, die an das Tankoberteil (38) oder das Tankunterteil (36) angeformt ist.

## Claims

1. Heatable high-pressure cleaning device (10) with a fuel-operated heat exchanger (19) and a fuel tank (34) having a tank upper section (38) with a closable filling opening (64) and a tank lower section (36) forming the base (48) of the fuel tank (34), wherein the tank upper section (38) is connected to the tank lower section (36) in a materially joined manner via a join area (60), wherein the join area (60) extends in a horizontal plane (46) in the horizontal position of use of the high-pressure cleaning device (10), and wherein the fuel tank (34) comprises a filling level limiting device (74) for limiting the maximum filling level of the fuel tank (34) in the horizontal position of use of the high-pressure cleaning device (10) **characterized in that** the fuel tank (34) is fillable with liquid fuel only up to beneath the join area (60) in a horizontal position of use of the high-pressure cleaning device (10), wherein the maximum filling level of the fuel tank (34) in the horizontal position of use of the high-pressure cleaning device (10) can be limited by the filling level limiting device (74) to a filling level height which is less than the distance between the join area (60) and the base (48) of the fuel tank (34), and wherein the high-pressure cleaning device (10) has a chassis (16) and the fuel tank (34) is integrated into the chassis (16), wherein the chassis (16) comprises a chassis lower section (30) produced from plastic and a chassis upper section (32) produced from plastic, wherein the chassis lower section (30) is welded to the chassis upper section (32) and wherein the chassis lower section (30) forms the tank lower section (36) and the chassis upper section (32) the tank upper section (38) of the fuel tank (34).

2. Heatable high-pressure cleaning device in accordance with Claim 1, **characterized in that** the filling level limiting device (74) is arranged on the underside of the tank upper section (38) facing the base (48) of the fuel tank (34).

3. Heatable high-pressure cleaning device in accordance with Claim 1 or 2, **characterized in that** the filling level limiting device (74) is connected to the tank upper section (38) in one piece.

4. Heatable high-pressure cleaning device in accordance with any one of the preceding Claims, **characterized in that** the filling level limiting device (74) comprises a dip tube (76), wherein the filling opening (64) opens into the dip tube (76) and the dip tube (76) extends within the fuel tank (34) as far as beneath the join area (60) in the horizontal position of use of the high-pressure cleaning device (10).

5. Heatable high-pressure cleaning device in accordance with Claim 4, **characterized in that** the dip tube (76) is integrally formed on the tank upper section (38).

6. Heatable high-pressure cleaning device in accordance with Claim 4 or 5, **characterized in that** the filling opening (64) is surrounded outside the fuel tank (34) by a filler neck (98) aligned coaxially to the dip tube (76).

7. Heatable high-pressure cleaning device in accordance with Claim 6, **characterized in that** the tank upper section (38), the filler neck (98) and the dip tube (76) form a one-piece molded plastic part.

8. Heatable high-pressure cleaning device in accordance with any one of the preceding Claims, **characterized in that** the fuel tank (34) bears an elastically deformable impact protection (88) in an outer area forming at least part of the outer contour of the high-pressure cleaning device (10), said impact protection extending along the join area (60).

9. Heatable high-pressure cleaning device in accordance with Claim 8, **characterized in that** the impact protection (88) comprises at least one elastically deformable impact lip (90, 92) integrally formed on the tank upper section (38) or the tank lower section (36).

## Revendications

1. Appareil de nettoyage haute pression (10) chauffant avec un échangeur de chaleur (19) fonctionnant par combustible et un réservoir de combustible (34), qui présente une partie supérieure de réservoir (38) avec une ouverture de remplissage (64) pouvant être fermée et une partie inférieure de réservoir (36) réalisant le fond (48) du réservoir de combustible (34), dans lequel la partie supérieure de réservoir (38) est reliée par liaison de matière à la partie inférieure de réservoir (36) par l'intermédiaire d'une zone d'assemblage (60), dans lequel la zone d'assemblage (60), dans la position d'utilisation horizontale de l'appareil de nettoyage haute pression (10), s'étend dans un plan horizontal (46), et dans lequel le réservoir de combustible (34) comprend un dispositif de limitation de niveau (74) destiné à limiter le niveau maximal du réservoir de combustible (34) dans la position d'utilisation horizontale de l'appareil de nettoyage haute pression (10), **caractérisé en ce que** le réservoir de combustible (34), dans une position d'utilisation horizontale de l'appareil de nettoyage haute pression (10), ne peut être rempli de combustible liquide que jusqu'au-dessous de la zone d'assemblage (60), dans lequel le niveau maximal du réservoir de combustible (34), dans la position d'utilisation horizontale de l'appareil de nettoyage haute pression (10), peut être limité au moyen du dispositif de limitation de niveau (74) à une hauteur de niveau qui est plus petite que la distance entre la zone d'assemblage (60) et le fond (48) du réservoir de combustible (34), et dans lequel l'appareil de nettoyage haute pression (10) présente un châssis (16) et le réservoir de combustible (34) est intégré dans le châssis (16), dans lequel le châssis (16) comprend une partie inférieure de châssis (30) fabriquée en matière plastique et une partie supérieure de châssis (32) fabriquée en matière plastique, dans lequel la partie inférieure de châssis (30) est soudée avec la partie supérieure de châssis (32) et dans lequel la partie inférieure de châssis (30) réalise la partie inférieure de réservoir (36) et la partie supérieure de châssis (32) la partie supérieure de réservoir (38) du réservoir de combustible (34).

2. Appareil de nettoyage haute pression chauffant selon la revendication 1, **caractérisé en ce que** le dispositif de limitation de niveau (74) est disposé sur la face inférieure, tournée vers le fond (48) du réservoir de combustible (34), de la partie supérieure de réservoir (38).

3. Appareil de nettoyage haute pression chauffant selon la revendication 1 ou 2, **caractérisé en ce que** le dispositif de limitation de niveau (74) est relié d'une seule pièce à la partie supérieure de réservoir (38).

4. Appareil de nettoyage haute pression chauffant selon l'une quelconque des revendications précédentes, **caractérisé en ce que** le dispositif de limitation de niveau (74) comprend un tube plongeur (76), dans lequel l'ouverture de remplissage (64) débouche dans le tube plongeur (76) et le tube plongeur (76) s'étend dans la position d'utilisation horizontale de l'appareil de nettoyage haute pression (10) à l'intérieur du réservoir de combustible (34) jusqu'au-dessous de la zone d'assemblage (60).

5. Appareil de nettoyage haute pression chauffant selon la revendication 4, **caractérisé en ce que** le tube plongeur (76) est formé sur la partie supérieure de réservoir (38).

6. Appareil de nettoyage haute pression chauffant selon la revendication 4 ou 5, **caractérisé en ce que** l'ouverture de remplissage (64) à l'extérieur du réservoir de combustible (34) est entourée par une tubulure de remplissage (98), qui est orientée de manière coaxiale par rapport au tube plongeur (76).

7. Appareil de nettoyage haute pression chauffant selon la revendication 6, **caractérisé en ce que** la partie supérieure de réservoir (38), la tubulure de remplissage (98) et le tube plongeur (76) réalisent une pièce moulée en matière plastique d'une seule pièce.

8. Appareil de nettoyage haute pression chauffant selon l'une quelconque des revendications précédentes, **caractérisé en ce que** le réservoir de combustible (34) porte dans une zone extérieure, qui forme au moins une partie du contour extérieur de l'appareil de nettoyage haute pression (10), une protection antichoc (88) déformable élastiquement, qui s'étend le long de la zone d'assemblage (60).

9. Appareil de nettoyage haute pression chauffant selon la revendication 8, **caractérisé en ce que** la protection antichoc (88) comprend au moins une lèvre antichoc (90, 92) déformable élastiquement, qui est formée sur la partie supérieure de réservoir (38) ou la partie inférieure de réservoir (36).
